Europäisches Patentamt

European Patent Office

Office européen des brevets

(11) Veröffentlichungsnummer: **0 301 190 B1**

(12) # EUROPÄISCHE PATENTSCHRIFT

(45) Veröffentlichungstag der Patentschrift: **22.01.92**

(51) Int. Cl.⁵: **D06F 37/20**, F16F 7/08

(21) Anmeldenummer: **88108097.2**

(22) Anmeldetag: **20.05.88**

(54) **Schwingungsdämpfer, insbesondere für Waschmaschinen.**

(30) Priorität: **29.07.87 DE 3725100**

(43) Veröffentlichungstag der Anmeldung:
**01.02.89 Patentblatt 89/05**

(45) Bekanntmachung des Hinweises auf die
Patenterteilung:
**22.01.92 Patentblatt 92/04**

(84) Benannte Vertragsstaaten:
**DE ES FR GB IT SE**

(56) Entgegenhaltungen:
CH-A- 297 225     DE-A- 1 460 969
DE-A- 1 675 156     DE-A- 2 406 144
DE-A- 3 216 152     DE-A- 3 237 759
DE-C- 955 749

PATENT ABSTRACTS OF JAPAN, Band 8, Nr.
143 (M-306)[1580], 4. Juli 1984; & JP-A-59 40
041 (TOYOTA JIDOSHA K.K.) 05-03-1984

(73) Patentinhaber: **SUSPA COMPART Aktiengesellschaft
Industriestrasse 12-14
W-8503 Altdorf(DE)**

(72) Erfinder: **Bauer, Hans-Peter
Ziegelhütte 9
W-8503 Altdorf(DE)**
Erfinder: **Bauer, Hans Jürgen
Am Eichenhain 8
W-8503 Altdorf(DE)**
Erfinder: **Stadelmann, Ludwig
Schopperstrasse 14
W-8503 Altdorf(DE)**

(74) Vertreter: **Rau, Manfred, Dr. Dipl.-Ing. et al
Rau & Schneck, Patentanwälte Königstrasse
2
W-8500 Nürnberg 1(DE)**

## Beschreibung

Die Erfindung betrifft einen Schwingungsdämpfer nach dem Oberbegriff des Anspruches 1.

Derartige Schwingungsdämpfer werden für Waschmaschinen eingesetzt, die eine Trommel mit horizontaler Achse aufweisen. Die Abstützung des Waschaggregates gegenüber dem Maschinengestell erfolgt mittels elastisch angelenkter Federbeine oder mittels Zugfedern von der Oberseite des Maschinengestells aus. Die Schwingungsdämpfung wird mittels in die Federbeine integrierter oder mittels gesonderter Schwingungsdämpfer vorgenommen, die als Reibungsdämpfer oder als hydraulische Dämpfer ausgebildet sein können. Im Hinblick darauf, daß die Waschmaschinen einerseits mit einer niedrigen unterkritischen Waschdrehzahl und andererseits mit einer hohen überkritischen Schleuderdrehzahl antreibbar sind, besteht das sich aus den allgemeinen Gesetzen über gedämpfte Schwingungen ergebende Problem darin, die Dämpfungskräfte der Schwingungsdämpfer im Bereich der kritischen Drehzahl möglichst groß zu machen, sie aber im Bereich niedriger bzw. hoher überkritischer Drehzahl entsprechend den dort herrschenden kleinen Schwingungsamplituden klein zu machen.

Aus der DE-PS 24 06 144 ist es hierzu für ein Federbein mit integrierter Reibungsdämpfung bereits bekannt geworden, in dem zylindrischen Gehäuse ein zweites ebenfalls zylindrisches Innengehäuse koaxial anzuordnen, das gegenüber dem es aufnehmenden Gehäuse einen Leerhub ausüben kann. Aufgrund dieser Ausgestaltung übt dieses Federbein bei niedrigen Schwingungsamplituden des schwingenden Systems, beispielsweise also des Waschaggregats, überhaupt keine Reibungs-Dämpfungskräfte auf dieses schwingende System aus. Erst wenn dieses Innengehäuse nach Durchlaufen seines freien Verschiebeweges an der entsprechenden Stirnseite des Gehäuses zur Anlage kommt, also bei entsprechend größeren Schwingungsamplituden, wird die Kolbenstange mit dem Reibungskolben relative zu diesem Innengehäuse an dessen Innenwand verschoben, wodurch Reibungs-Dämpfungskräfte erzeugt werden. Dieses Federbein ist konstruktiv aufwendig und weist den Nachteil auf, daß das Innengehäuse zwangsläufig eine große schwingende Masse aufweist.

Aus der EP-PS 0 042 708 ist es bekannt, ein Federbein für die schwingungsfähige Abstützung eines Waschaggregats einer Waschmaschine mit einer Reibungsdämpfungseinrichtung zu versehen, in der eine Kolbenstange des Federbeins unter leichter Reibung verschiebbar hindurchgeführt ist. Auf der Kolbenstange befindet sich ein ringförmiges Dämpfungsteil, das bei kleinen Schwingungsamplituden der Kolbenstange relativ zu der Reibungseinrichtung nicht mit im Schwingungsweg befindlichen Anschlägen zur Anlage kommt. Wenn Schwingungsamplituden eine konstruktiv vorgegebene Amplitude überschreiten, dann kommt dieser Ring mit einem der Anschläge in Berührung, so daß dann die Kolbenstange sich unter entsprechender höherer Reibungskraft durch diesen Ring hindurchschiebt. Dieser bekannte Schwingungsdämpfer hat den Nachteil, konstruktiv relativ aufwendig zu sein; hinzu kommen die kleinen Reibungsflächen, da diese jeweils nur an der Kolbenstange ausgebildet sind. Die Reibungskräfte zwischen der Kolbenstange und den Führungsbüchsen sind stark toleranzabhängig und damit nicht reproduzierbar.

Aus der EP-OS 0 217 234 ist es bekannt, eine solche progressive Dämpfung, d.h. eine Zunahme der Dämpfungskraft bei größeren Schwingungsamplituden, dadurch zu erreichen, daß die Innenwand des Gehäuses des Schwingungsdämpfers sich verjüngt, so daß der Reibungskolben mit zunehmender Schwingungsamplitude größere Reibungskräfte und damit größere Dämpfungskräfte erzeugt, da die Kraft zwischen Reibbelag und Innenwand zunimmt, wenn diese ihren Durchmesser verringert. Ein wesentlicher Nachteil dieser Ausgestaltung liegt darin, daß die Amplitude der Schwingungen in beiden Schwingungsrichtungen zunimmt, daß aber eine solche Durchmesserverringerung nur in einer Richtung durchgeführt werden kann. Der Schwingungsdämpfer behält also keine symmetrische Charakteristik.

Aus der JP-A-59/40041 ist ein Dämpfer bekannt, der zwischen einem Motor und dem Chassis eines Kraftfahrzeuges zur Dämpfung der Motorschwingungen eingesetzt wird. Dieser weist ein zylindrisches Rohr mit einem Befestigungselement und eine Stange, ebenfalls mit einem Befestigungselement,auf, wobei ein Befestigungselement am Motor und das andere Befestigungselement am Chassis angebracht werden. An der Stange ist eine kolbenähnliche Scheibe angebracht, an deren Außenumfang ein O-Ring gelagert ist, der wiederum gegen die Innenwand einen längsgeschlitzten Hülse anliegt. Diese wiederum liegt mit einem Belag an der Innenwand des zylindrischen Rohres an. Schwingungen kleiner Amplitude werden durch innere Reibung durch elastische Deformation des O-Ringes oder durch die axiale Verschiebung des O-Ringes gegenüber der geschlitzten Hülse gedämpft. Schwingungen größerer Amplitude werden durch Verschiebungen der geschlitzten Hülse gegenüber dem zylindrischen Rohr gedämpft. Durch die elastische Verspannung des Dämpfers über den O-Ring sind die Reibungsverhältnisse nicht genau definierbar, worauf es bei den Schwingungen von Kraftfahrzeugmotoren mit in der Regel niedriger Amplitude nicht ankommt.

Der Erfindung liegt daher die Aufgabe zugrunde, einen Schwingungsdämpfer der gattungsgemäßen Art so weiterzubilden, daß er bei möglichst einfachem Aufbau genau definierte Reibungsverhältnisse für die Dämpfung von Schwingungen kurzer Amplitude und Schwingungen großer Amplitude hat.

Diese Aufgabe wird erfindungsgemäß durch die Merkmale im Kennzeichnungsteil des Anspruches 1 gelöst. Die kurzen nur wenig gedämpften Schwingungsbewegungen bei sehr niedriger oder sehr hoher Drehzahl werden nur zwischen Kolbenstange mit Reibungskolben und der Innenwand des Kolbenträgers ausgeführt, der also gegenüber dem Gehäuse unbeweglich bleibt. Die relativ kleine Dämpfung in diesem Bereich führt dazu, daß das Gesamtsystem weitgehend geräuschfrei schwingt. Der Kolbenträger kann - bezogen auf die Länge des Gehäuses - also auch sehr kurz ausgeführt werden. Die großen Reibungsdämpfungskräfte bei hohen Schwingungsamplituden werden dann zwischen dem am Kolbenträger angebrachten Kolben und dem Gehäuse des Schwingungsdämpfers ausgeübt. Die erfindungsgemäßen Schwingungsdämpfer können bei Waschmaschinen eingesetzt werden, deren Waschaggregate über Federbeine gegenüber dem Grundrahmen des Maschinengestells abgestützt sind. Besonders bevorzugt werden sie aber bei Waschmaschinen eingesetzt, deren Waschaggregat, das ebenfalls eine horizontale Trommelachse aufweist, mittels Zugfedern am oberen Teil des Maschinengestells aufgehängt ist.

Die Weiterbildung nach Anspruch 2 ermöglicht eine besonders einfache Montage des Kolbenträgers und damit auch eine besonders einfache Herstellung, da die Halbschalen des Kolbenträgers in sehr einfacher Weise gespritzt werden können. Diese Ausgestaltung ermöglicht es wiederum, den Kolbenträger aus Kunststoff herzustellen, wie es im Anspruch 3 angegeben ist.

Damit wird auch die schwingende Masse sehr klein gemacht. Dies ermöglicht es weiter, den Kolbenträger mit Flanschringen nach Anspruch 4 zu versehen, die den Verschiebeweg des an der Kolbenstange angebrachten Reibungskolbens relativ zum Kolbenträger festlegen, wobei hierzu zusätzlich noch Anschlagdämpfer nach Anspruch 5 vorgesehen sein können. Die Flanschringe lassen gleichzeitig auch noch Platz zum Luftdurchtritt bei Verschiebungen des gesamten Systems im Gehäuse frei.

Die Weiterbildung nach Anspruch 6 ermöglicht es, insbesondere beim Aufbringen von Schwingungen großer Amplituden eine trockene Reibung und die damit verbundene zu starke Erwärmung und den damit verbundenen zu großen Verschleiß zu unterbinden.

Die Ausgestaltung der Reibungsbeläge nach den Ansprüchen 7 und 8 gewährleistet eine konstante Reibungskraft für jeden Reibungskolben über seinen jeweiligen Hub und über einen Zyklus und über seine lange Lebensdauer.

Anspruch 9 gibt eine besonders vorteilhafte Ausgestaltung eines an der Kolbenstange angebrachten Reibungskolbens wieder.

Weitere Vorteile und Merkmale der Erfindung ergeben sich aus der Beschreibung eines Ausführungsbeispiels anhand der Zeichnung. Es zeigt

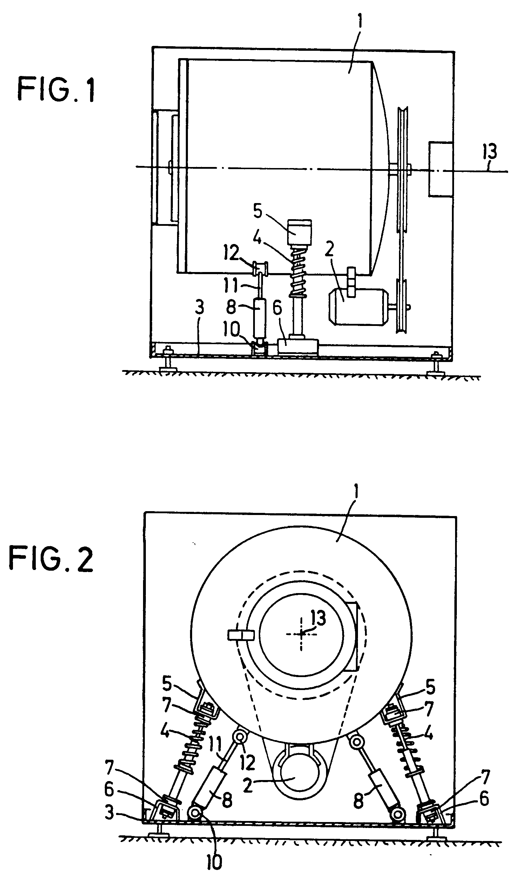

Fig. 1 eine Waschmaschine in schematischer Darstellung in Seitenansicht,

Fig. 2 die Waschmaschine gemäß Fig. 1 in Vorderansicht und

Fig. 3 einen als Reibungsdämpfer ausgestalteten Schwingungsdämpfer im Längsschnitt.

Eine Trommelwaschmaschine mit waagerechter Trommelachse weist ein schwingungsfähiges Waschaggregat 1 mit einem Antrieb 2 auf. Weitere mit dem Waschaggregat verbundene Zubehörteile, beispielsweise ein Getriebe, sind der Einfachheit halber nicht dargestellt. Das schwingungsfähige Waschaggregat ist auf dem durch einen Grundrahmen gebildeten Maschinengestell 3 über Federbeine 4 abgestützt. Die Federbeine 4 sind an ihrem oberen Ende über angeschweißte Brücken oder Bügel 5 mit dem Waschaggregat 1 und am unteren Ende über entsprechende Bügel oder Brücken 6 mit dem Maschinengestell 3 verbunden. Die oberen und die unteren Enden der Federbeine 4 sind mit den Bügeln 5 bzw. 6 unter Zwischenschaltung von Gummikörpern 7 elastisch eingespannt. Das Waschaggregat 1 ist im gewählten Ausführungsbeispiel lediglich durch zwei Federbeine 4 frei schwingungsfähig abgestützt. Eine derartige schwingungsfähige Abstützung ist allgemein bekannt, und zwar insbesondere aus der DE-AS 16 10 138 (entsprechend US-PS 3 509 742). Eine etwas andere, hier ebenfalls in Betracht kommende Art der Verbindung zwischen den Federbeinen und dem Maschinengestell 3 einerseits und dem Waschaggregat 1 andererseits ist aus der DE-OS 32 37 759 (entsprechend US Ser.No. 539 594) bekannt.

Zwischen dem Waschaggregat 1 und dem Maschinengestell 3, in diesem Fall wiederum dem Grundrahmen, sind weiterhin Schwingungsdämpfer 8 angeordnet, bei denen es sich um sogenannte Reibungsdämpfer handelt. Diese weisen ein zylindrisches Gehäuse 9 auf, das ein unteres, nach Art eines Auges ausgebildetes Befestigungselement 10 aufweist, mittels dessen es am Maschinengestell 3 angelenkt wird. Nach oben ist eine Kolbenstange 11 aus dem Gehäuse 9 herausgeführt, an deren äußerem freien Ende ebenfalls ein Befestigungselement 12 nach Art eines Auges angebracht ist, mittels dessen der Schwingungsdämpfer 8 am Waschaggregat 1, angelenkt ist. Selbstverständlich können die Schwingungsdämpfer 8 auch in umgekehrter Richtung, d.h. mit nach unten herausgeführter Kolbenstange 11, zwischen Waschaggregat 1 und Maschinengestell 3 angelenkt werden.

Wenn die im Waschaggregat 1 befindliche Trommel um die horizontale Trommelachse 13 angetrieben wird, dann wird das gesamte Waschaggregat 1 aufgrund der durch die in der Trommel befindliche Wäsche gegebenen Unwucht in Drehschwingungen um diese Trommelachse 13 versetzt. Diese Schwingungen werden von den Federbeinen 4 einschließlich der Gummikörper 7 aufgenommen und von den Schwingungsdämpfern 8 gedämpft. Dieser Aufbau und dieser Mechanismus ist allgemein bekannt und in der Praxis üblich.

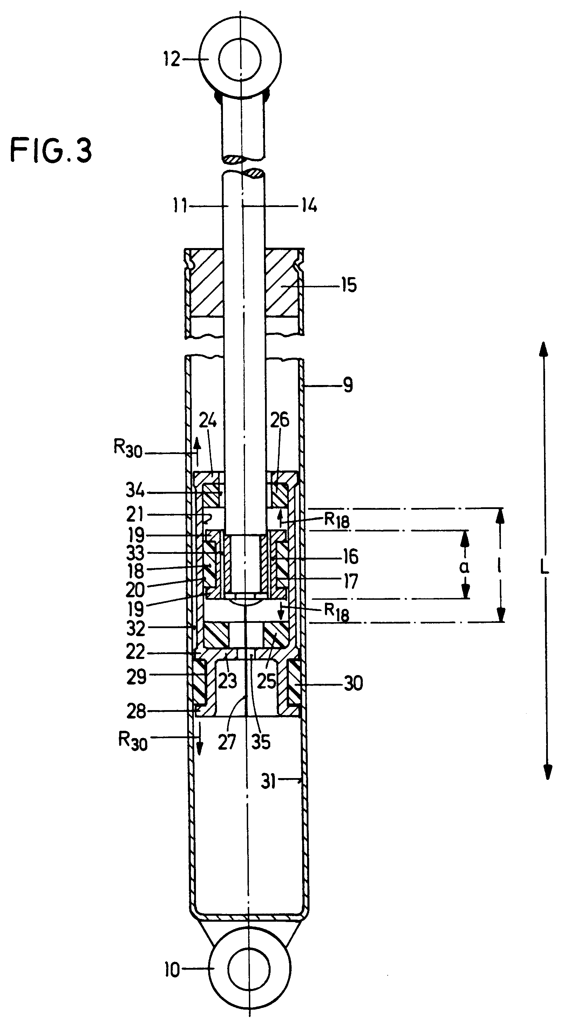

Wie aus Fig. 3 hervorgeht, ist die Kolbenstange 11 koaxial zur Mittel-Längs-Achse 14 des zylindrischen Gehäuses 9 angeordnet und aus letzterem an einem Ende herausgeführt. In diesem Bereich ist die Kolbenstange 11 mittels einer Führung 15 geführt. Am inneren Ende der Kolbenstange 11 ist ein Reibungskolben 16 axial unverschiebbar befestigt. Er weist in einer flachen Umfangsnut 17 einen Reibbelag 18 auf, der aus einem geschäumten Kunststoff, beispielsweise einem Polyurethan-Schaumstoff, und zwar bevorzugt einem geschlossenzelligen Polyurethan-Schaumstoff, besteht. Dieser Reibbelag 18 ist in Form eines rechteckigen Streifens ausgebildet und in die Umfangsnut 17 des Reibungskolbens 16 eingelegt. Er kann auch als geschlossene Hülse ausgebildet sein.

Der radial über die Ränder 19 des Reibungskolbens 16 vorstehende, also radial aus der Umfangsnut 17 herausragende Reibungsbelag 18 liegt mit seiner Reibfläche 20 an der Innenwand 21 eines rohrförmigen Kolbenträgers 22 an. Dieser rohrförmige Kolbenträger 22 weist an seinen beiden Enden radial nach innen ragende Flanschringe 23 bzw. 24 auf, gegen deren Innenseite jeweils ringförmige Anschlagdämpfer 25,26 aus gut dämpfendem Werkstoff, beispielsweise einem geeigneten Kautschuk, anliegen. Der Kolbenträger 22 ist in einer die Achse 14 aufnehmenden Trennfläche 27 geteilt, so daß eine Montage des Kolbenträgers 22 um die Kolbenstange 11 mit dem Reibungskolben 16 in einfacher Weise möglich ist.

Am Kolbenträger 22 ist ein weiterer Reibungskolben 28 ausgebildet, der eine nach außen offene Umfangsnut 29 aufweist, in der ein Reibbelag 30 angeordnet ist, für den das gleiche gilt, wie für den Reibbelag 18. Dieser Reibbelag 30 liegt gegen die Innenwand 31 des rohrförmigen, also zylindrischen Gehäuses 9 an. Axial versetzt gegenüber dem Reibungskolben 28 ist in der Außenwand des Kolbenträgers 22 eine flache ringförmige Kammer 32 ausgebildet. Diese Kammer 32 kann zur Aufnahme von Schmierfett dienen. Ihr Zweck kann aber auch nur darin bestehen, einen notwendigen flächigen Abstand zwischen Kolbenträger 22 und Innenwand 31 des Gehäuses 9 zu erreichen, wo also keine Reibung zwischen dem Kolbenträger 22 und der Innenwand 31 des Gehäuses 9 stattfindet.

Die Reibungskraft $R_{18}$ zwischen dem Reibbelag 18 des Reibungskolbens 16 und der Innenwand 21 des Kolbenträgers 22 ist deutlich geringer als die Reibungskraft $R_{30}$ zwischen dem Reibbelag 30 des Reibungskolbens 28 und der Innenwand 31 des Gehäuses 9. Es gilt also $R_{18} < R_{30}$. Für alle gängigen Bereiche der Praxis gilt, daß die Reibungskraft $R_{30}$ zwei- bis zehnmal so groß ist wie die Reibungskraft $R_{18}$. Wenn das Waschaggregat 1 nur mit geringen Amplituden schwingt, verändert also der Kolbenträger 22 mit dem Reibungskolben 28 seine axiale Lage gegenüber dem Gehäuse 9 nicht. Vielmehr werden die Schwingungsbewegungen relativ zwischen Kolbenstange 11 und Gehäuse 9 nur zwischen dem Reibungskolben 16 und dem Kolbenträger 22 ausgeführt. Erst wenn die Schwingungsamplitude L größer wird als der lichte Abstand zwischen den Anschlagdämpfern 25,26, nimmt der Reibungskolben 16 den Kolbenträger 22 mit. Der lichte Abstand der Anschlagdämpfer 25,26 ist definiert durch ihren Abstand 1 abzüglich der axialen Länge a des Reibungskolbens 16. Der Reibungskolben 16 kommt also entweder mit dem Anschlagdämpfer 25 oder dem Anschlagdämpfer 26 in Berührung, und nimmt den Kolbenträger 22 relativ zum Gehäuse 9 mit, wenn gilt L > l-a. Wenn also diese Bedingung erfüllt ist, erfolgt jeweils ein Übergang von der kleineren Reibungskraft $R_{18}$ auf die größere Reibungskraft $R_{30}$, d.h. bei den genannten größeren Schwingungsamplituden erfolgt auch eine stärkere Dämpfung. Das Maß l-a, d.h. der lichte Abstand der Anschlagdämpfer 25,26, ist so bemessen, daß beim reinen Waschbetrieb mit unterkritischer Drehzahl der im Waschaggregat 1 befindlichen Trommel und beim Schleudern in überkritischer Drehzahl nur die kleinere Reibungsdämpfung mit der Reibungskraft $R_{18}$ zur Wirkung kommt, während beim Hochfahren von der Waschdrehzahl in die Schleuderdrehzahl, also beim Durchfahren der kritischen Drehzahl mit den entsprechenden großen Schwingungsamplituden die größere Reibungskraft $R_{30}$ und damit die größere Dämpfungskraft zur Wirkung kommt. Voraussetzung für dieses Prinzip ist, daß - wie allgemein üblich - die Schleuderdrehzahl sich im überkritischen Bereich des gesamten Schwingungssystems befindet, während sich die Waschdrehzahl im unterkritischen Bereich des gesamten Schwingungssystems befindet. Durch die ringförmigen Anschlagdämpfer 25,26 wird sichergestellt, daß ein weicher Übergang von der Dämpfung mit geringerer Dämpfungskraft $R_{18}$ auf die größere Dämpfungskraft $R_{30}$ erfolgt.

Ein oder mehrere Axialkanäle 33 und ein Spalt 34 zwischen dem Flanschring 24 und dem zugeordneten Anschlagdämpfer 26 einerseits und der Kolbenstange 11 andererseits und eine Öffnung 35 im Flanschring 23 und dem zugeordneten Anschlagdämpfer 25 ermöglichen einen Luftaustausch bei Bewegungen des Reibungskolbens 16 relativ zum Kolbenträger 22 und bei Bewegungen des Kolbenträgers 22 relativ zum Gehäuse 9.

Da die Reibbeläge 18 über ihre gesamte Länge in Richtung der Achse 14 unter gleichmäßiger Vorspannung an der Innenwand 21 bzw. der Innenwand 31 anliegen, und aufgrund ihrer Ausgestaltung insbesondere aus einem Polyurethan-Schaumstoff, üben sie über ihren gesamten Hub eine konstante Reibungskraft $R_{18}$ bzw. $R_{30}$ aus.

Der Reibungskolben 16 und insbesondere der Kolbenträger 22 nebst Reibungskolben 28 bestehen aus Kunststoff, haben also eine relativ geringe schwingende Masse.

Als Werkstoff für den Kolbenträger 22 und den Reibungskolben 16 kommt insbesondere ein Acetalharz in Betracht.

**Patentansprüche**

1. Schwingungsdämpfer für Waschmaschinen mit horizontaler Trommelachse, die mit unterkritischer Waschdrehzahl und mit überkritischer Schleuderdrehzahl antreibbar sind, mit einem zylindrischen Gehäuse (9) und mit einer koaxial zur Mittel-Längs-Achse (14) des Gehäuses (9) aus diesem herausgeführten Kolbenstange (11), die an ihrem im Gehäuse (9) befindlichen Ende mit einem Reibungskolben (16) versehen ist, der mit einem Reibbelag (18) unter Reibung gegen die Innenwand (21) eines im Gehäuse (9) verschiebbar angeordneten, den Reibungskolben (16) umgebenden, im wesentlichen zylindrischen Innengehäuses anliegt, dadurch gekennzeichnet, daß das Innengehäuse als mit einem Reibungskolben (28) versehener Kolbenträger (22) ausgebildet ist, wobei der Reibungskolben (28) mit einem Reibbelag (30) unter Reibung gegen die Innenwand (31) des Gehäuses (9) anliegt, und daß die Reibungskraft ($R_{18}$) zwischen dem an der Kolbenstange (11) angebrachten Reibungskolben (16) und der Innenwand (21) des Kolbenträgers (22) kleiner ist als die Reibungskraft ($R_{30}$) zwischen dem am Kolbenträger (22) ausgebildeten Reibungskolben (28) und der Innenwand (31) des Gehäuses (9), wobei für das Verhältnis der Reibungskraft ($R_{18}$) zwischen dem an der Kolbenstange (11) angebrachten Reibungskolben (16) und der Innenwand (21) des Kolbenträgers (22) und der Reibungskraft ($R_{30}$) zwischen dem am Kolbenträger (22) ausgebildeten Reibungskolben (28) und der Innenwand (31) des Gehäuses (9) gilt $R_{18}:R_{30} = 1:2$ bis $1:10$.

2. Schwingungsdämpfer nach Anspruch 1, dadurch gekennzeichnet, daß der Kolbenträger (22) in einer die Mittel-Längs-Achse (14) aufnehmenden Trennfläche (27) geteilt ist.

3. Schwingungsdämpfer nach Anspruch 1, dadurch gekennzeichnet, daß der Kolbenträger (22) aus Kunststoff besteht.

4. Schwingungsdämpfer nach Anspruch 1, dadurch gekennzeichnet, daß der Kolbenträger (22) Flanschringe (23,24) aufweist, die den an der Kolbenstange (11) angebrachten Reibungskolben (16) mit axialem Abstand radial übergreifen.

5. Schwingungsdämpfer nach Anspruch 4, dadurch gekennzeichnet, daß gegen die Innenseiten der Flanschringe (23,24) Anschlagdämpfer (25,26) anliegen.

6. Schwingungsdämpfer nach Anspruch 1, dadurch gekennzeichnet, daß in der Außenseite des Kolbenträgers (22) eine Kammer (32) zur Aufnahme von Schmierfett vorgesehen ist.

7. Schwingungsdämpfer nach Anspruch 1, dadurch gekennzeichnet, daß die Reibungsbeläge (18,30) aus geschäumtem Kunststoff bestehen.

8. Schwingungsdämpfer nach Anspruch 7, dadurch gekennzeichnet, daß die Reibungsbeläge (18,30) aus geschäumtem Polyurethan bestehen.

9. Schwingungsdämpfer nach einem der Ansprüche 1 bis 8, dadurch gekennzeichnet, daß der an der Kolbenstange (11) angebrachte Reibungskolben (16) eine flache Umfangsnut (17) aufweist, in der der Reibbelag (18) in Form eines rechteckigen Streifens oder als geschlossene Hülse angeordnet ist.

**Claims**

1. Vibration damper for washing machines which have a horizontal drum axis and which can be driven at a subcritical washing speed and a supercritical spinning speed, comprising a cylindrical housing (9) and a piston rod (11) extending coaxially with the central longitudinal axis (14) of the housing (9) out of the latter and being provided at its end in the housing (9) with a friction piston (16) which bears with a friction lining (18) under friction against the inner wall (21) of an essentially cylindrical inner housing which is arranged displaceably in the housing (9) and surrounds the friction piston (16), characterised in that the inner housing is in the form of a piston carrier (22) provided with a friction piston (28), the friction piston (28) bearing with a friction lining (30) under friction against the inner wall (31) of the housing (9), and that the frictional force ($R_{18}$) between the friction piston (16) attached to the piston rod (11) and the inner wall (21) of the piston carrier (22) is smaller than the frictional force ($R_{30}$) between the friction piston (28) formed on the piston carrier (22) and the inner wall (31) of the housing (9), $R_{18} : R_{30} = 1:2$ to 1:10 applying to the ratio of frictional force ($R_{18}$) between the friction piston (16) attached to the piston rod (11) and the inner wall (21) of the piston carrier (22) and the frictional force ($R_{30}$) between the friction piston (28) formed on the piston carrier (22) and the inner wall (31) of the housing (9).

2. Vibration damper according to Claim 1, characterised in that the piston carrier (22) is divided in a parting plane (27) including the central longitudinal axis (14).

3. Vibration damper according to Claim 1, characterised in that the piston carrier (22) is made of plastic material.

4. Vibration damper according to Claim 1, characterised in that the piston carrier (22) has flanged rings (23, 24) which are spaced axially from and grip radially over the friction piston (16) attached to the piston rod (11).

5. Vibration damper according to Claim 4, characterised in that stop dampers (25, 26) bear against the inner sides of the flanged rings (23), 24).

6. Vibration damper according to Claim 1, characterised in that a chamber (32) for receiving lubricating grease is provided in the outer side of the piston carrier (22).

7. Vibration damper according to Claim 1, characterised in that the friction linings (18, 30) are made of foamed plastic material.

8. Vibration damper according to Claim 7, characterised in that the friction linings (18, 30) are made of polyurethane foam.

9. Vibration damper according to any one of Claims 1 to 8, characterised in that the friction piston (16) attached to the piston rod (11) has a flat circumferential groove (17) in which the friction lining (18) is arranged in the form of a rectangular strip or a closed sleeve.

## Revendications

1. Amortisseur d'oscillations pour machines à laver qui comportent un axe de tambour horizontal et qui peuvent être entraînées avec une vitesse de rotation de lavage sous-critique et avec une vitesse de rotation d'essorage surcritique, l'amortisseur comportant un carter cylindrique (9) et une tige de piston (11) qui sort du carter (9) coaxialement à l'axe longitudinal central (14) de celui-ci, et qui est pourvue à son extrémité située à l'intérieur du carter (9), d'un piston de friction (16) qui s'applique sous friction par l'intermédiaire d'une garniture de friction (18), contre la paroi intérieure (21) d'un carter intérieur sensiblement cylindrique disposé de manière coulissante dans le carter (9) et entourant le piston de friction (16), caractérisé en ce que le carter intérieur est réalisé sous la forme d'un support de piston (22) pourvu d'un piston de friction (28), le piston de friction (28) s'appliquant sous friction contre la paroi intérieure (31) du carter (9) par l'intermédiaire d'une garniture de friction (30), et en ce que la force de frottement ($R_{18}$) entre le piston de friction (16) monté sur la tige de piston (11) et la paroi intérieure (21) du support de piston (22), est inférieure à la force de frottement ($R_{30}$) entre le piston de friction (28) formé sur le support de piston (22) et la paroi intérieure (31) du carter (9), le rapport entre la force de frottement ($R_{18}$) entre le piston de friction (16) monté sur la tige de piston (11) et la paroi intérieure (21) du support de piston (22) et la force de frottement ($R_{30}$) entre le piston de friction (28) formé sur le support de piston (22) et la paroi intérieure (31) du carter (9) étant tel que $R_{18}:R_{30} = 1:2$ à 1:10.

2. Amortisseur d'oscillations selon la revendication 1, caractérisé en ce que le support de piston (22) est divisé dans un plan de joint (27) renfermant l'axe longitudinal central (14).

3. Amortisseur d'oscillations selon la revendication 1, caractérisé en ce que le support de piston (22) est réalisé en matière plastique.

4. Amortisseur d'oscillations selon la revendication 1, caractérisé en ce que le support de piston (22) comporte des flasques annulaires (23, 24) qui recouvrent radialement et à distance dans la direction axiale, le piston de friction (16) monté sur la tige de piston (11).

5. Amortisseur d'oscillations selon la revendication 4, caractérisé en ce que des tampons amortisseurs de butée (25, 26) s'appuient contre les côtés intérieurs des flasques annulaires (23, 24).

6. Amortisseur d'oscillations selon la revendication 1, caractérisé en ce que sur le côté extérieur du support de piston (22) est prévue une chambre (32) destinée à recevoir de la graisse de lubrification.

7. Amortisseur d'oscillations selon la revendication 1, caractérisé en ce que les garnitures de friction (18, 30) sont réalisées en une mousse de matière plastique.

8. Amortisseur d'oscillations selon la revendication 7, caractérisé en ce que les garnitures de friction (18, 30) sont réalisées en une mousse de polyuréthanne.

9. Amortisseur d'oscillations selon l'une des revendications 1 à 8, caractérisé en ce que le piston de friction (16) monté sur la tige de piston (11) comporte une rainure périphérique aplatie (17) dans laquelle est disposée la garniture de friction (18) se présentant sous la forme d'une bande rectangulaire ou d'une douille fermée.

FIG.1

FIG.2

FIG.3